# EUROPÄISCHE PATENTSCHRIFT

(11) **EP 2 495 090 B1**
(45) Veröffentlichungstag und Bekanntmachung des Hinweises auf die Patenterteilung: **10.09.2014**
(21) Anmeldenummer: 12158122.7
(22) Anmeldetag: 05.03.2012
(51) Int. Cl.: B29C 49/46, B29C 49/42, B29C 49/48, B29C 49/06, B29C 49/36

(54) **Blasmaschine mit Sterilraum und Medienzuführung in dem Sterilraum**
Blow moulding machine with sterile area and media supply in the sterile area
Souffleuse dotée d'une chambre stérile et d'une entrée de fluides dans la chambre stérile

(30) Priorität: 04.03.2011 DE 102011013118
(43) Veröffentlichungstag der Anmeldung: 05.09.2012
(73) Patentinhaber: Krones AG, 93073 Neutraubling (DE)
(72) Erfinder: Geltinger, Florian, 93093 Donaustauf (DE); Neubauer, Michael, 93053 Regensburg (DE)
(74) Vertreter: Bittner, Bernhard

(56) Entgegenhaltungen:
- EP-A1- 2 246 176
- EP-A1- 2 388 129
- EP-A1- 2 431 058
- FR-A1- 2 945 979

## Beschreibung

Die vorliegende Erfindung bezieht sich auf eine Vorrichtung zum Umformen von Kunststoffvorformlingen zu Kunststoffbehältnissen. Derartige Vorrichtungen, insbesondere Streckblasmaschinen, sind aus dem Stand der Technik seit langem bekannt. Dabei werden die Behältnisse von Blasstationen aufgenommen und, beispielsweise durch Beaufschlagung mit Druckluft, zu Kunststoffbehältnissen expandiert.

Aus dem Stand der Technik sind weiterhin Blasmaschinen bekannt, welche eine Herstellung der Kunststoffbehältnisse unter aseptischen Bedingungen ermöglichen. So beschreibt beispielsweise die WO 2010020529 A2 eine Streckblasmaschine für Getränkebehältnisse, bei der der Blasvorgang in einem Sterilraum stattfindet. In derartigen Sterilräumen muss jegliches Risiko für die Hygiene vermieden werden, das zu einer Kontamination führen könnte. Aus der

Die nachveröffentlichte EP 2 388 129 A1 beschreibt eine Vorrichtung zum Umformen von Kunststoffvorformlingen zu Kunststoffbehältnissen mit einer Vielzahl von Umformungsstationen, welche an einem beweglichen Träger angeordnet sind, wobei die Umformungsstationen jeweils Blasformen aufweisen, Innerhalb derer die Kunststoffvorformlinge durch Beaufschlagung mit einem fließfähigen Medium zu Kunststoffbehältnissen umformbar sind sowie Blasformträgem zum Halten dieser Blasformen, wobei die Blasformträger wenigstens zwei relativ zueinander bewegliche Blasformträgerteile zum Öffnen und Schließen der Blasformen aufweisen und mit wenigstens einem Befestigungselement, über das wenigstens ein Element der Umformungsstationen an dem Träger angeordnet ist mit einem gegenüber einer Umgebung mittels wenigstens einer Wandung abgegrenzten Reinraum, der die einzelnen Umformungsstationen wenigstens teilweise umgibt, so dass die Umformungsstationen innerhalb dieses Reinraums bewegbar sind und mit wenigstens einer Zuführleitung, welche wenigstens einer in dem Sterilraum angeordneten Umformungsstation ein fließfähige Medium zu deren Betrieb zuführt.

Eine derartige Blasstation besteht meist aus zwei beweglich zueinander angeordneten Formträgern, die die eigentlichen Blasformen - ggf. mittels Trägerschalen - aufnehmen. Diese beiden Blasformträger sind dabei zueinander beweglich, um einen Öffnungsvorgang zum Einbringen des Kunststoffvorformlings und zum Entnehmen der fertig geblasenen Flasche ausführen zu können.

Weiterhin ist es bekannt, dass aus prozesstechnischen Gründen eine Kühlung der Blasformen erfolgt, da diese sich andernfalls durch die eingebrachte Wärme der erhitzten Kunststoffvorformlinge unzulässig aufheizen könnten.

Bevorzugt weisen derartige Blasstationen auch an mindestens je einem Formträger pro Blasstation ein sogenanntes Druckkissen auf. Dieses wird beim Blasvorgang mit Druckluft beaufschlagt, um die Verformung der Formträger auf Grund des Innendrucks von bis zu 40 bar zu kompensieren.

Um diesen beiden Funktionen, das heißt, die Kühlung der Form und das Druckkissen zu realisieren, werden bei den heutigen Streckblasmaschinen Medien wie beispielsweise Kühlmedien und Druckluft über Schläuche an die Umformungsstationen bzw. Blasstationen geführt.

Derartige Schläuche und auch Kupplungen stellen jedoch ein hygienisches Risiko dar. Einerseits sind derartige Verschlauchungen unter Umständen schwer zu reinigen und zu sterilisieren. Andererseits verhindern sie ein aufgeräumtes und sauberes Erscheinungsbild des Reinraums.

Der vorliegenden Erfindung liegt daher die Aufgabe zu Grunde, die Sterilisation und Aufrechterhaltung der Sterilisation für derartige Blasmaschinen zu verbessern. Diese Aufgabe wird erfindungsgemäß durch den Gegenstand von Anspruch 1 erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist eine Vielzahl von Umformungsstationen auf, welche an einem beweglichen Träger angeordnet sind, wobei die Umformungsstationen jeweils Blasformen aufweisen, innerhalb derer die Kunststoffvorformlinge durch Beaufschlagung mit einem fließfähigen Medium zu Kunststoffbehältnissen umformbar sind sowie Blasformträger zum Halten dieser Blasformen und wobei die Blasformträger wenigstens zwei zueinander bewegliche Blasformträgerteile zum Öffnen und Schließen der Blasformen aufweisen und wobei wenigstens ein Befestigungselement vorgesehen ist, über das wenigstens eine Element der Umformungsstationen an dem Träger angeordnet ist. Weiterhin weist die Vorrichtung einen gegenüber einer Umgebung mittels wenigstens einer Wandung abgegrenzten (und bevorzugt auch abgedichteten) Reinraum (im Folgenden auch als Sterilraum bezeichnet) auf, der die einzelnen Umformungsstationen wenigstens teilweise umgibt, sodass die Umformungsstationen innerhalb dieses Reinraumes bewegbar sind. Vorteilhaft ist jeder Umformungsstation ein derartiges Befestigungselement zugeordnet. Weiterhin ist wenigstens eine Zuführleitung vorgesehen, welche wenigstens einer in dem Sterilraum angeordneten Umformungsstation ein fließfähiges Medium zu deren Betrieb zuführt.

Erfindungsgemäß erstreckt sich diese Zuführleitung für das fließfähige Medium durch eine Reinraumgrenze des Reinraums hindurch und die Zuführleitung ist wenigstens abschnittsweise durch das Befestigungselement geführt. Unter einer Zuführung des Mediums im Betrieb wird verstanden, dass das fließfähige Medium wenigstens einen Teilprozess des Umformungsvorgangs fördert. So wäre es möglich, dass die Zuführleitung unmittelbar durch das Befestigungselement ausgebildet ist, etwa in Form einer in dem Befestigungselement vorhandenen Bohrung, welche als Kanal für das fließfähige Medium dient. Es wäre jedoch auch möglich, dass die Zuführleitung, etwa in Form eines Schlauches durch das Befestigungselement hindurch geführt wird.

Bei einer weiteren erfindungsgemäßen Ausführungsform erstreckt sich die Zuführleitung für das fließfähige Medium ebenfalls durch eine Reinraumgrenze des Reinraums hindurch und die Zuführleitung verläuft wenigstens abschnittsweise innerhalb eines in dem Reinraum angeordneten rohrförmigen Körpers.

Bei beiden erfindungsgemäßen Ausgestaltungen wird daher vorgeschlagen, dass die Zuführleitung in dem Reinraum innerhalb eines sterilen oder sterilisierbaren Körpers verläuft. Auf diese Weise kann erreicht werden, dass innerhalb beispielsweise des rohrförmigen Körpers auch unhygienische Medien fließen können, oder auch ein oder mehrere unhygienische Schläuche verlaufen können. Damit wird bei diesen Ausführungsformen eine Möglichkeit geschaffen, innerhalb des Reinraums gleichwohl unsterile Medien zu führen. Bei dem Medien für den Betrieb der Umformungsstation handelt es sich damit bevorzugt nicht um die Druckluft, welche gerade zum Umformen der Kunststoffvorformlinge dient, sondern um ein Medium, welches in anderer Weise dem Betrieb der Umformungsstation selbst dient.

Dieser genannte rohrförmige Körper kann sich dabei beispielsweise von einer Sterilraumgrenze zu einer Umformungsstation erstrecken. Auch wäre es möglich, dass innerhalb des Reinraums eine Vielzahl an derartigen rohrförmigen Körpern angeordnet ist. Es wäre jedoch auch möglich, dass innerhalb des Reinraums beispielsweise ein Reservoir oder Kanal für das fließfähige Medium angeordnet ist, aus dem mit einer Vielzahl von Ventilen die einzelnen Umformungsstationen gespeist werden können.

Bei einer weiteren alternativen erfindungsgemäßen Ausführungsform wäre es auch möglich, dass innerhalb des Sterilraums ein schlauchförmiger Körper bzw. ein flexibler Wellschlauch vorgesehen ist, durch den ein Fluid von einer unsterilen Umgebung in den Reinraum bzw. zu dem Formträger oder den Umformungsstationen transportiert werden kann. Damit ist hier vorteilhaft eine Außenwandung dieses Wellschlauchs bzw. schlauchförmigen Körpers steril ausgebildet und innerhalb dieses Schlauchs kann gleichwohl ein unsteriles Medium geführt werden. Dabei ist es auch möglich, dass sich ein Abschnitt dieses Schlauchs durch die Sterilraumgrenze erstreckt und bevorzugt gegenüber der Sterilraumgrenze abgedichtet ist.

Vorteilhaft steht das fließfähige Medium innerhalb der Zuführleitung und vorteilhaft auch innerhalb des Reinraums unter einem Druck, der (insbesondere im Arbeitsbetrieb) stets unter 40 bar, bevorzugt stets unter 30 bar, besonders bevorzugt stets unter 20 bar und besonders bevorzugt stets unter 10 bar liegt.

Es wird daher erfindungsgemäß vorgeschlagen, dass insbesondere zur Vermeidung von Schläuchen und dergleichen ein Teil der Zuführleitung durch ein derartiges Befestigungselement gebildet ist, beispielsweise in Form eines Kanals, der durch dieses Befestigungselement hindurch geführt ist. Bei dem fließfähigen Medium handelt es sich insbesondere um ein gasförmiges Medium, es könnte sich jedoch auch um eine Flüssigkeit handeln oder auch um elektrischen Strom. In diesem Falle würde es sich bei der Zuführleitung um eine elektrische Leitung handeln, welche beispielsweise als Stromzuführleitung oder Steuerleitung für elektrische Motoren dient. Vorteilhaft handelt es sich bei dem Träger um einen drehbaren Träger bzw. ein Blasrad, an dem die einzelnen Umformungsstationen angeordnet sind. Vorteilhaft sind die Umformungsstationen an einem Außenumfang dieses Blasrads angeordnet. Bei dem fließfähigen Medium zum Umformen der Kunststoffvorformlinge handelt es sich insbesondere um Luft und besonders bevorzugt um Sterilluft.

Bei einer weiteren vorteilhaften Ausführungsform ist der Reinraum kanalartig um die Umformungsstationen bzw. deren Transportpfad ausgebildet. Durch die erfindungsgemäße Vorgehensweise können Verschlauchungen innerhalb des Reinraums vermieden oder zumindest eingeschränkt bzw. hygienegerecht gestaltet werden.

Vorteilhaft handelt es sich bei dem Befestigungselement um eine Schwenkwelle, mittels derer die Blasformträger bezüglich einander bewegbar sind. So wäre es möglich, dass eine Schlauchverbindung innerhalb dieser Welle geführt wird oder dass innerhalb dieser Welle ein Kanal zum Leiten des fließfähigen Mediums angeordnet ist. Es wäre jedoch auch möglich, dass die Zuführleitung in dem Träger angeordnet ist, der beispielsweise einen gegenüber dem Träger unbeweglichen Blasformträgerteil hält. Vorzugsweise tritt die Zuführleitung durch einen Querschnitt der Schwenkwelle, erstreckt sich also im Inneren der Schwenkwelle. Bei einer weiteren vorteilhaften Ausführungsform verläuft die Zuführleitung parallel zu einer Längsrichtung der Schwenkwelle.

Bei einer weiteren vorteilhaften Ausführungsform weist die Zuführleitung wenigstens einen flexiblen Abschnitt auf. Auf diese Weise können beispielsweise Schwenkbewegungen, die durch das Öffnen und Schließen der Blasformen verursacht werden, kompensiert werden, insbesondere, wenn diese Schlauchverbindungen zumindest abschnittsweise durch die besagte Schwenkwelle geführt werden. Vorteilhaft setzt sich die Zuführleitung aus mehreren Abschnitten zusammen.

Bei einer weiteren vorteilhaften Ausführungsform ist der flexible Abschnitt vollständig innerhalb des Reinraums oder vollständig außerhalb des Reinraums angeordnet. Besonders bevorzugt ist der besagte flexible Abschnitt vollständig außerhalb des Reinraums angeordnet, sodass beispielsweise eine Kompensierung der Schwenkbewegung in einem hygienisch unkritischen Bereich der Maschine, das heißt insbesondere außerhalb des Reinraums erfolgt.

Bei einer weiteren vorteilhaften Ausführungsform steht wenigstens eine Zuführleitung mit wenigstens einer Blasform oder mit wenigstens einem Blasformträger in Strömungsverbindung. So kann beispielsweise die Zuführleitung vorgesehen sein, um das oben erwähnte Druckkissen zu betätigen oder auch, um die Blasform zu kühlen. Es wäre auch denkbar, dass die Zuführleitung beispielsweise einen Ventilblock mit Steuerventilen versorgt, um auf diese Weise die Ventilansteuerung für den Blasvorgang zu ermöglichen.

Bei einer weiteren vorteilhaften Ausführungsform weist die Vorrichtung wenigstens eine Abführleitung auf, welche ein fließfähiges Medium aus dem Sterilraum abführt. So können beispielsweise Leckagemedien, die insbesondere unsteril sein können, aus dem Reinraum abgeführt werden. Vorteilhaft dient wenigstens eines der oben beschriebenen Befestigungselemente auch als Abführleitung.

Bei einer weiteren vorteilhaften Ausführungsform ist die Zuführleitung vollständig gegenüber dem Reinraum abgedichtet. Auf diese Weise ist es möglich, dass in der Zuführleitung auch innerhalb des Reinraums ein unsteriles Medium führbar ist.

Vorteilhaft weist wenigstens ein Befestigungselement einen Kanal zum Leiten des Mediums auf. So wäre es möglich, dass dieser Kanal innerhalb des Befestigungselements ausgebildet ist.

Bei einer weiteren vorteilhaften Ausführungsform erstreckt sich die Zuführleitung durch eine von dem Träger ausgebildete Wandung. So kann beispielsweise der Träger an seinem Außenumfang ein C-förmiges Profil aufweisen und der obere Schenkel dieses C's sowie der untere Schenkel jeweils auch Wandungen des Sterilraums darstellen. Auf diese Weise wird eine möglichst kleinbauende Ausgestaltung des Sterilraums erreicht.

Bei einer weiteren vorteilhaften Ausführungsform ist ein Blasformträgerteil stationär gegenüber dem Träger angeordnet. Auf diese Weise kann die Anzahl an nötigen Lagerelementen reduziert werden.

Vorteilhaft ist das Befestigungselement, in dem die Zuführleitung angeordnet ist, beweglich gegenüber dem Träger angeordnet, beispielsweise in Form der Schwenkwelle.

Bei einer weiteren vorteilhaften Ausführungsform sind Lager zum Lagern des Befestigungselements außerhalb des Reinraums angeordnet. Vorteilhaft ist auch wenigstens eine Dichtungsvorrichtung vorgesehen, um die Zuführleitung gegenüber dem Reinraum abzudichten und besonders bevorzugt ist auch wenigstens eine Dichtungseinrichtung vorgesehen, um das besagte bewegliche Befestigungselement gegenüber dem Träger abzudichten.

Weitere Vorteile und Ausführungsformen ergeben sich aus den beigefügten Zeichnungen.

Darin zeigen:
- Fig. 1: eine schematische Darstellung einer Anlage zum Herstellen von Kunststoffbe-hältnissen;
- Fig. 2: eine Ansicht eines Reinraums im Bereich einer Umformungsstation;
- Fig. 3: eine Umformungsstation nach dem Stand der Technik;
- Fig. 4: eine schematische Darstellung einer erfindungsgemäßen Umformungsstation;
- Fig. 5: eine Detaildarstellung der in Fig. 4 gezeigten Umformungsstation;
- Fig. 6: eine Veranschaulichung zu einer erfindungsgemäßen Blasform;
- Fig. 7: eine weitere Darstellung einer erfindungsgemäßen Umformungsstation;
- Fig. 8: eine Darstellung einer an einem Blasformträger angeordneten Blasform;
- Fig. 9: eine Darstellung einer weiteren Ausführungsform einer erfindungsgemäßen Vorrichtung;
- Fig. 10: eine Darstellung einer weiteren Ausführungsform einer erfindungsgemäßen Vorrichtung;
- Fig. 11: eine weitere Ansicht der in Fig. 9 und 10 gezeigten Vorrichtung;
- Fig. 12: eine Teildarstellung der in den Fig. 9 - 10 gezeigten Umformungsstationen; und
- Fig. 13: eine Darstellung zur Veranschaulichung eines Druckkissens

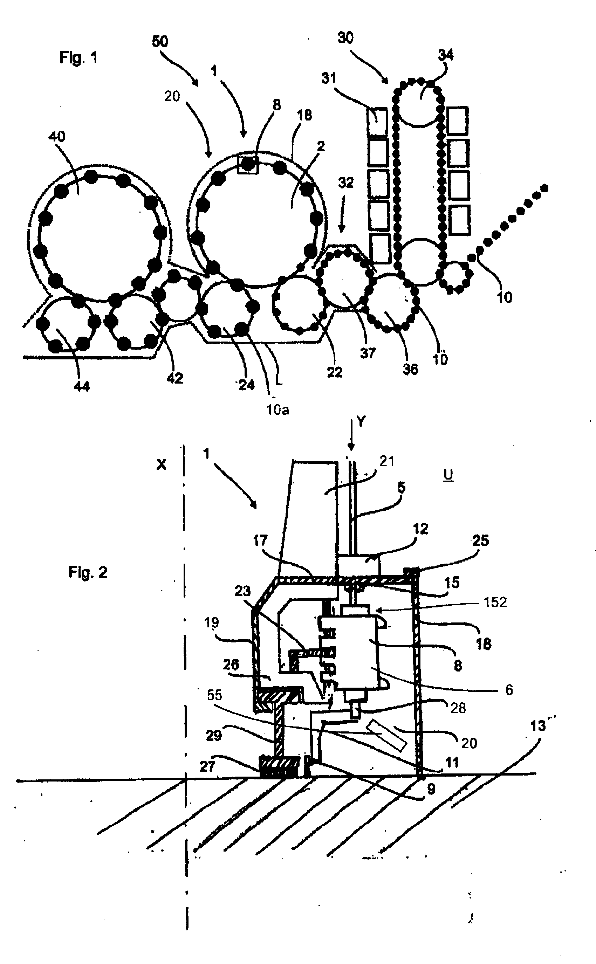

Figur 1 zeigt eine schematische Darstellung einer Anlage zum Herstellen von Kunststoffbehältnissen. Diese Anlage 50 weist eine Heizeinrichtung 30 auf, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Vorformlinge 10 an eine Sterilisationseinrichtung 32 übergibt. Diese Sterilisationseinrichtung 32 weist dabei hier ebenfalls ein Transportrad 37 auf und an diesem Transportrad 37 oder auch stationär können Sterilisationselemente angeordnet sein. In diesem Bereich ist beispielsweise eine Sterilisation durch Wasserstoffperoxidgas oder auch durch elektromagnetische Strahlung möglich. Insbesondere wird in diesem Bereich eine Innensterilisation der Vorformlinge durchgeführt.

Das Bezugszeichen 20 bezeichnet in seiner Gesamtheit einen Reinraum, dessen Außenbegrenzungen hier durch die punktierte Linie L angedeutet sind. Man erkennt, dass dieser Reinraum 20 in dem Bereich der Sterilisationseinheit 32 beginnt. In diesem Bereich können Schleuseneinrichtungen vorgesehen sein, um die Kunststoffvorformlinge in den Reinraum 20 einzuführen, ohne dass dabei zu viel Gas innerhalb des Reinraums verloren geht.

Der Reinraum ist, wie durch die gestrichelte Linie L angedeutet, an die Außengestalt der einzelnen Anlagenkomponenten angepasst. Auf diese Weise kann das Volumen des Reinraums reduziert werden.

Das Bezugszeichen 1 bezeichnet in ihrer Gesamtheit eine Umformungsvorrichtung, bei der an einem Transportrad 2 eine Vielzahl von Blasstationen bzw. Umformungsstationen 8 angeordnet ist, wobei hier lediglich einer dieser Blasstationen 8 dargestellt ist. Mit diesen Blasstationen 8 werden die Kunststoffvorformlinge 10 zu Behältnissen 10a expandiert. Obwohl hier nicht detailliert gezeigt, befindet sich nicht der gesamte Bereich des Transporteinrichtung 2 innerhalb des Reinraums 20, sondern der Reinraum 20 bzw. Isolator ist gewissermaßen als Mini-Isolator innerhalb der gesamten Vorrichtung realisiert. So wäre es möglich, dass der Reinraum zumindest im Bereich der Umformungsvorrichtung 1 kanalartig ausgeführt ist.

Das Bezugszeichen 22 bezieht sich auf eine Zuführeinrichtung, welche die Vorformlinge an die Umformungseinrichtung 1 übergibt und das Bezugszeichen 24 auf eine Abführeinrichtung, welche die hergestellten Kunststoffbehältnisse 20 von der Umformungsvorrichtung 1 abführt. Man erkennt, dass der Reinraum 20 in dem Bereich der Zuführeinrichtung 22 und der Abführeinrichtung 24 jeweils Ausnehmungen aufweist, welche diese Einrichtungen 22, 24 aufnehmen. Auf diese Weise kann in besonders vorteilhafter Weise eine Übergabe der Kunststoffvorformlinge 10 an die Umformungsvorrichtung 1 bzw. eine Übernahme der Kunststoffbehältnisse 10a von der Umformungsvorrichtung 1 erreicht werden.

Mit einer Übergabeeinheit 42 werden die expandierten Kunststoffbehältnisse an eine Befüllungseinrichtung 40 übergeben und von dieser Befüllungseinrichtung 40 anschließend über eine weitere Transporteinheit 44 abgeführt. Dabei befindet sich auch die Befüllungseinrichtung 40 innerhalb des besagten Reinraums 20. Auch im Falle der Befüllungseinrichtung wäre es möglich, dass nicht die gesamte Befüllungseinrichtung 40 mit beispielsweise einem Reservoir für ein Getränk vollständig innerhalb des Reinraums 20 angeordnet sind, sondern auch hier lediglich diejenigen Bereiche, in denen tatsächlich die Behältnisse geführt werden. Insoweit könnte auch die Befüllungseinrichtung in ähnlicher Weise aufgebaut sein wie die Vorrichtung 1 zum Umformen von Kunststoffvorformlingen 10.

Wie erwähnt, ist der Reinraum 20 im Bereich der Vorrichtung 1 auf einen geringst möglichen Bereich reduziert, nämlich im Wesentlichen auf die Blasstationen 8 selbst. Durch diese kleinbauende Gestaltung des Reinraums 20 ist es leichter und schneller möglich, einen Reinraum überhaupt herzustellen und auch die Sterilhaltung in der Betriebsphase ist weniger aufwändig. Auch wird weniger Sterilluft benötigt, was zu kleineren Filteranlagen führt und auch die Gefahr von unkontrollierter Wirbelbildung wird reduziert.

Figur 2 zeigt eine Detaildarstellung der Vorrichtung 1 im Bereich einer Blasstation 8. Eine Vielzahl derartiger Blasstationen 8 wird mit einer Transporteinrichtung 2 bzw. einem Träger drehend um eine Achse X bewegt. Die Blasstation 8 ist, wie in Figur 2 ersichtlich, innerhalb des Reinraums 20, der hier kanalartig ausgebildet ist, geführt. Dieser Reinraum 20 wird abgeschlossen durch eine bewegliche Seitenwand 19 und einen einteilig mit dieser Seitenwand 16 ausgebildeten Deckel 17. Diese Seitenwand 19 und der Deckel 17 drehen dabei mit der Blasstation 8 mit.

Das Bezugszeichen 18 bezieht sich auf eine weitere Wandung, welche den Reinraum 20 begrenzt. Diese Wandung 18 ist hier eine außen liegende Wandung, welche stationär angeordnet ist. Zwischen dem Deckel 17 und der Wandung 18 ist eine Dichtungseinrichtung 25 vorgesehen, welche die gegeneinander beweglichen Elemente 17 und 18 gegeneinander abdichtet, beispielsweise, wie oben erwähnt, unter Verwendung eines Wasserschlosses. Der untere Bereich der Wandung 18 ist fest und abdichtend an einem Boden 13 angeordnet. Innerhalb des Reinraums 20 und hier unmittelbar an der Wandung 19 anliegend ist ein Träger 26 vorgesehen, der sich ebenfalls drehend bewegt und an dem wiederum eine Halteeinrichtung 23 vorgesehen ist, welche die Blasstation 8 hält.

Das Bezugszeichen 11 bezieht sich auf eine Folgeeinrichtung, welche von einer Führungskurve 9 betätigt werden kann, um die Blasstation auf ihrem Weg durch den Reinraum 6 zu öffnen und zu schließen, um insbesondere den Kunststoffvorformling in die Blasstation einzulegen und um ihn auch wieder zu entnehmen. Dabei ist eine Führungskurve 9 auch innerhalb des Reinraums 20 angeordnet. Es wäre jedoch beispielsweise auch möglich, etwa bereits einen Abschnitt 11 unterhalb der einzelnen Blasstationen 8 aus dem Reinraum 20 herauszuführen.

Die Transporteinrichtung 2 kann noch weitere Elemente aufweisen, welche oberhalb des Reinraums 20 angeordnet sind.

Der Träger 26 ist dabei fest auf einem Haltekörper 29 angeordnet und dieser Haltekörper ist wiederum beweglich gegenüber dem Boden 13. Dabei bezieht sich das Bezugszeichen 27 auf eine weitere Dichtungseinrichtung, welche auch in diesem Bereich eine Abdichtung der gegeneinander beweglichen Bereiche 13 und 29 bewirkt.

Das Bezugszeichen 5 bezieht sich auf eine Reckstange, welche gegenüber der Blasstation beweglich ist, um die Kunststoffvorformlinge 10 in ihrer Längsrichtung zu recken. Dabei ist auf dem Deckel 17 hier ein Schlitten 12 angeordnet, demgegenüber die Reckstange in der Richtung Y beweglich ist. Das Bezugszeichen 21 bezieht sich auf eine weitere Halterung für diesen Schlitten 12 der Reckstange 5.

Man erkennt, dass bestimmte Bereiche der Reckstange während des Blasvorgangs sowohl außerhalb des Reinraums 20 als auch innerhalb des Reinraums 20 sind. Zu diesem Zweck ist es möglich, außerhalb des Reinraums 20 bzw. oberhalb des Schlittens 12 eine Schutzeinrichtung wie einen Faltenbalg vorzusehen, der die Reckstange 5 umgibt, so dass kein Bereich der Reckstange 5 unmittelbar mit der Außenumgebung in Berührung kommt. Das Bezugszeichen U kennzeichnet die (unsterile) Umgebung des Reinraums 20. Das Bezugszeichen 28 kennzeichnet einen Träger zum Tragen einer Bodenform, welche ebenfalls einen Bestandteil der Blasform ausbildet. Dieser Träger ist dabei ebenfalls in der Richtung Y bewegbar.

Das Bezugszeichen 55 bezieht sich auf eine Sterilisationseinrichtung, welche hier bevorzugt im Inneren des Reinraums 20 angeordnet ist und zum Sterilisieren der einzelnen Umformungsstationen bzw. Bestandteilen dieser Umformungsstationen 8 dient. Diese Sterilisationseinrichtung 55 kann dabei die Umformungsstationen 8 beispielsweise mit Wasserstoffperoxid oder einem anderen Sterilisationsmittel beaufschlagen. Dabei kann die Sterilisationseinrichtung 55 stationär angeordnet sein und die Umformungsstationen können sich gegenüber dieser Sterilisationseinrichtung 55 bewegen.

Die (nicht gezeigten) Blasformen sind innerhalb der Blasformträger 6 angeordnet Genauer können dabei zwei Blasformträgerteile angeordnet sein, die gegenüber einander schwenkbar sind und jeweils ein Blasformteil halten. Durch diesen Schwenkvorgang können die Blasformen zum Einbringen von Kunststoffvorformlingen und zum Entnehmen fertig geblasener Behältnisse geöffnet werden. Diese Blasformträger und Blasformen sind dabei ebenfalls innerhalb des Reinraums angeordnet.

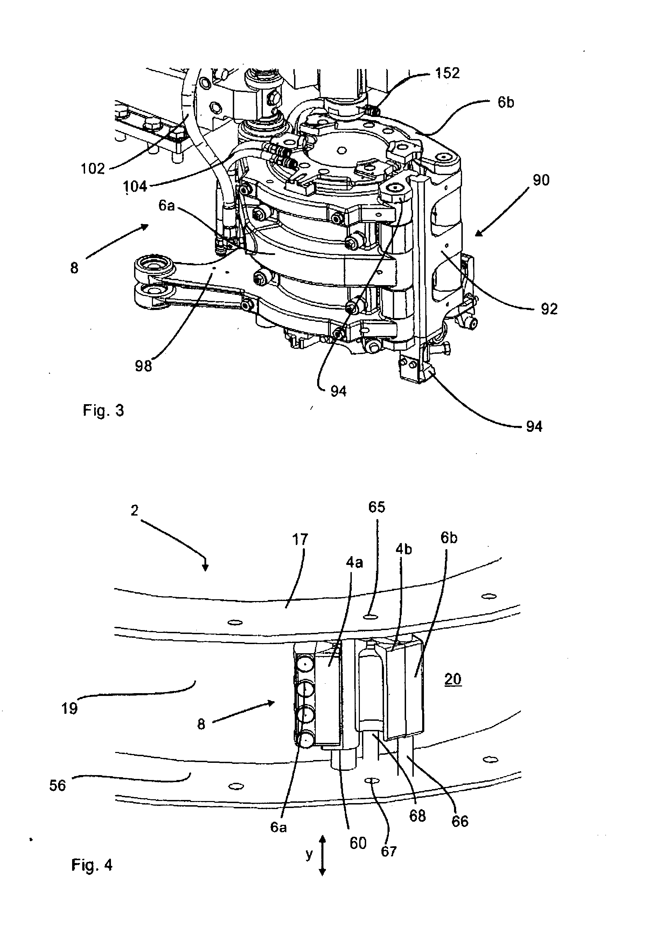

Fig. 3 zeigt eine Umformungsstation 8 nach dem Stand der Technik. Diese Umformungsstation weist dabei zwei Blasformträgerteile 6a und 6b auf, die gegenüber einander schwenkbar sind, um die (nicht gezeigte) Blasform zu öffnen und zu schließen. Das Bezugszeichen 98 kennzeichnet einen Hebel, der über eine (nicht gezeigte) Anlenkung angelenkt sein kann, um auf diese Weise eine Bewegung des Blasformträgerteils zu bewirken.

Das Bezugszeichen 90 kennzeichnet in seiner Gesamtheit einen Verriegelungsmechanismus, der zum Verriegeln der beiden Blasformträgerteile 6a und 6b in einem geschlossenen Zustand der Blasform dient. Hierzu greift ein schwenkbewegliches Verriegelungselement 92 in ein hier stationär angeordnetes zweites Verriegelungselement 94 ein und bewirkt so die Verriegelung der beiden Blasformträgerteile 6a und 6b gegeneinander.

Das Bezugszeichen 152 bezieht sich auf eine Beaufschlagungseinrichtung, wie beispielsweise eine Blasdüse, welche den innerhalb der Blasform angeordneten Kunststoffvorformling (nicht gezeigt) mit Druckluft zu dessen Expansion beaufschlagt. Die Bezugszeichen 102 und 104 kennzeichnen Schläuche, die zur Medienführung dienen. Diese Schläuche stellen ein hohes Verschmutzungsrisiko dar.

Fig. 4 zeigt eine erste Ausführungsform einer erfindungsgemäßen Vorrichtung. Dabei ist im Einzelnen eine Umformungsstation 8 gezeigt, die an einem Träger bzw. Blasrad 2 angeordnet ist. Die Wandungen 17, 19 und 56 sind dabei gleichfalls den Reinraum 20 (innerhalb dessen die Umformungsstationen 8 bewegt werden) begrenzende Wandungen. Damit bilden diese Wandungen hier gleichzeitig die Reinraumgrenze des Reinraums bzw. Sterilraums.

Bei der in Fig. 4 gezeigten Ausführungsform ist der rechte Blasformträger 6b und das in diesem angeordneten Blasformteil 4b stationär über zwei Träger 66 und 68 angeordnet. Der linke Blasformträger 6a mit der Blasform 4a ist über eine Schwenkwelle 60 schwenkbar zum Öffnen und Schließen der Blasform angeordnet. Die Bezugszeichen 65 und 67 beziehen sich auf Öffnungen, die in dem Träger bzw. in den Bereichen 17 und 56 des Trägers angeordnet sind. Über die Öffnung 65 kann beispielsweise eine Reckstange eingeführt werden und über die Öffnung 67 ein Bodenformträger. Auch dieser Bodenformträger kann dabei in der Richtung Y zum Öffnen und Schließen der Blasform beweglich sein. Entsprechende Führungskurven, welche die einzelnen Bewegungen durchführen, sind dabei vorteilhaft außerhalb des besagten Reinraums 20 angeordnet.

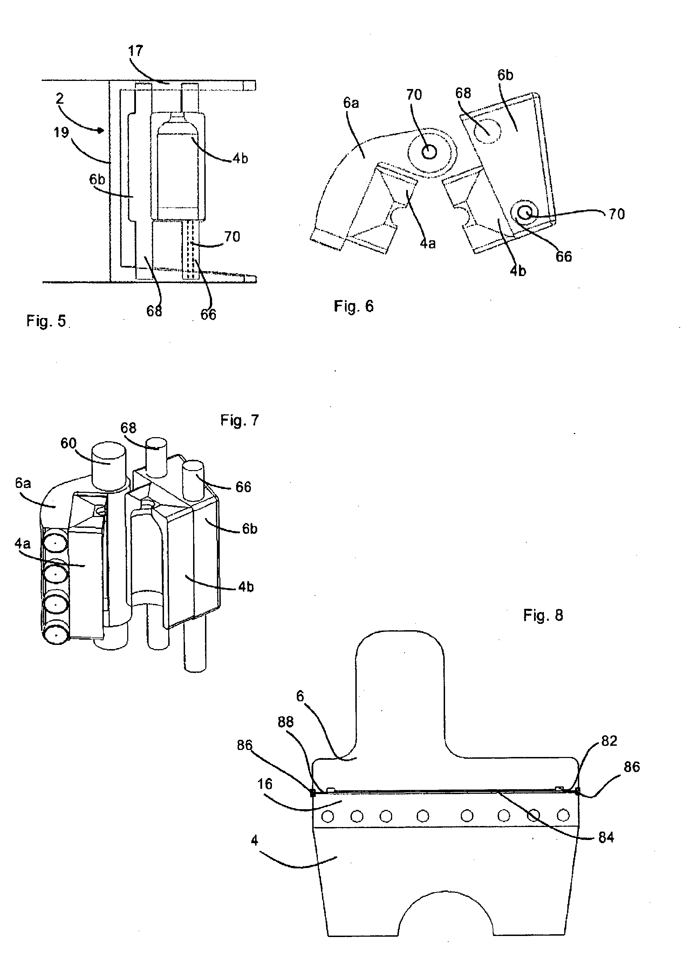

Fig. 5 zeigt eine weitere Ausführungsform einer erfindungsgemäßen Vorrichtung. Man erkennt hier insbesondere auch eine Zuführleitung 70, die hier innerhalb des Trägers 66 geführt ist. Entsprechend könnte durch diese Zuführleitung für das fließfähige Medium auch in dem Träger 68 oder auch der Schwenkwelle geführt sein. Über diese Zuführleitung kann beispielsweise ein (in Fig. 5 nicht gezeigtes) Druckkissen angesteuert werden.

Fig. 6 veranschaulicht wiederum die beiden Blasformteile 4a und 4b, die jeweils an Blasformträgerteilen 6a und 6b angeordnet sind, wobei hier - wie oben erwähnt - das Blasformträgerteil 6b stationär angeordnet ist und sich das Blasformträgerteil 6a diesem gegenüber mittels einer Schwenkwelle 60 bewegt. Diese Schwenkwelle ist dabei - wie oben erwähnt - vorteilhaft schwenkbar an dem Träger 2 angeordnet. Das Bezugszeichen 70 kennzeichnet hier wieder mögliche Anordnungen für die Zuführleitungen, die hier beispielsweise entweder in der Schwenkwelle 60 und/oder in einem der Träger 66 oder 68 angeordnet sein können. Es wäre auch möglich, dass in der Schwenkwelle 60 und/oder den Trägern 66 oder 68 mehrere Zuführ- und/oder Abführleitungen ausgebildet sind.

Fig. 7 zeigt eine weitere Ausgestaltung der erfindungsgemäßen Vorrichtung. Wie erwähnt, kann die Medienzuführung zu den Blasformen oder Blasformträgern über die Befestigungselemente, bei denen es sich hier um die Wellen 60, 66 und 68 handelt, erfolgen. Dabei können sowohl die feststehenden Träger bzw. Wellen 66, 68 als auch die schwenkbare Welle 60 verwendet werden. Es wären jedoch auch andere Ausführungsformen denkbar, beispielsweise mit zwei über Schwenkwellen beweglich gelagerten Blasformträgern. Werden die Medien -wie oben beschrieben - zu den Formträgern 6a, 6b gebracht, so ist in diesem Punkt die Konstruktion auf bestmögliche hygienische Bedingungen ausgelegt. Genauer befinden sich hier keinerlei Maschinenelemente, wie Schläuche, Rohre, Kupplungen oder Verschraubungen innerhalb des Reinraums.

Außerdem können die oben beschriebenen Wege der Medienzuführung auch verwendet werden, um Medien abzuführen. Dabei kann es sich beispielsweise um Kühlmedien handeln. Weiterhin kann beispielsweise auch ein Entlüftungskanal für das Betriebsmedium des Druckkissens (wobei es sich meistens um Luft handelt) erforderlich sein. Daneben kann auch ein Leckagekanal vorgesehen sein, der den abgedichteten Umgebungsraum der Druckkissendichtung (der bevorzugt als druckloser Zwischenraum ausgeführt ist) zur Umgebung hin entlüftet. Auf diese Weise kann sicher gestellt werden, dass bei einem Defekt der Druckkissendichtung keine verschmutzte Arbeitsluft über diese zusätzliche Dichtung in den Reinraum gepresst wird.

Fig. 8 veranschaulicht diesen Sachverhalt. Dabei ist an einem Blasformträger 6 über eine Trägerschale 16 eine Blasform 4 angeordnet. In einem Zwischenraum zwischen dem Blasformträger und der Trägerschale 16 wird ein Luftraum bzw. ein Druckkissen 84 ausgebildet. Das Bezugszeichen 82 bezieht sich auf eine Abdichtung für dieses Druckkissen, die hier voll umfänglich um das besagte Druckkissen 84 angeordnet ist. Daneben ist noch eine weitere Dichtungseinrichtung 86 hier außerhalb der Dichtungseinrichtung 82 vorgesehen. Falls gleichwohl unsteriles Medium aus dem Druckkissen 84 über die Dichtungseinrichtung 82 gelangt, gelangt dieses noch nicht in den Reinraum 20, sondern lediglich in den Zwischenraum 88 zwischen der Dichtungseinrichtung 82 und der Dichtungseinrichtung 86. Dieser Zwischenraum ist bevorzugt druckentlastet ausgeführt, sodass dieses unsterile Medium über eine (nicht gezeigte) Abführleitung aus dem Reinraum abgeführt werden kann.

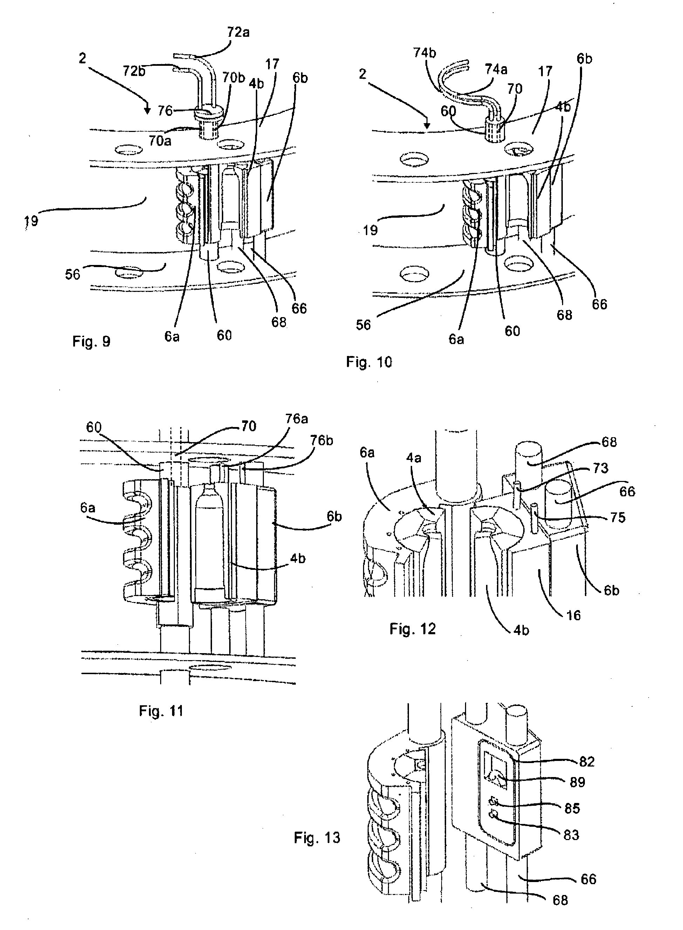

Die Figuren 9 - 12 veranschaulichen unterschiedliche Vorgehensweisen, um die fließfähigen Medien ab- oder zuzuführen. Bei der in Fig. 9 gezeigten Ausgestaltung erstrecken sich zwei Zu- bzw. Abführleitungen (innerhalb der Schwenkwelle 60) 70a und 70b aus dem Reinraum 20 heraus. Das Bezugszeichen 76 kennzeichnet einen Drehverteiler, der außerhalb des Reinraums 20 angeordnet ist und eine Weiterleitung der jeweiligen fließfähigen Medien beispielsweise an ein Reservoir (nicht gezeigt) erlaubt. Dabei ist zu berücksichtigen, dass im Arbeitsbetrieb die Welle 60 zum Öffnen und Schließen der Blasform hin und her schwenkt und andererseits die beiden Leitungen 72a und 72b fest, beispielsweise verrohrt, sind. Auf diese Weise kann auch eine Medienzuführung in der oszillierenden Welle 60 erfolgen.

Fig. 10 zeigt eine weitere mögliche Ausgestaltung, bei der ebenfalls die Bewegung einer oszillierenden Welle 60 kompensiert wird. Hier sind flexible Schlauchverbindungen 74a und 74b vorgesehen, welche die Schwenkbewegung aufnehmen. Auch diese flexiblen Abschnitte sind dabei vorteilhaft außerhalb des Sterilraums 20 angeordnet.

Die Fig. 11 und 12 zeigen zwei weitere Vorgehensweisen für diese Medienzuführung. Hier sind vorteilhaft flexible Verschlauchungsabschnitte 76a und 76b vorgesehen, welche direkt in eine Trägerschale 16 (beispielsweise zur Beaufschlagung des Druckkissens) münden. Diese Trägerschale 16 dient dabei auch als Halterung für die Blasform 4a.

Damit kann die Medienzuführung zu bewegten Bauteilen innerhalb des Reinraums auch über flexible Schläuche erfolgen. In dem in Fig. 12 gezeigten Beispiel ist der Formträger 6b starr am Blasrad 2 befestigt. Die Formträgerschale 16 wird über das Druckkissen, welches sich zwischen der Formträgerschale 16 und dem Formträger 6b befindet, bewegt. Aus diesem Grunde erfolgt vorteilhaft die Medienversorgung dieser Formträgerschale 16 über flexible Schläuche. Dabei sind vorteilhaft diese Schläuche 73 und 75 hygienisch einwandfrei gestaltet, das heißt, die Außenseite ist möglichst glatt und insbesondere ohne Rillen oder Gewebe ausgeführt. Dieses Prinzip der Medienversorgung kann auch für andere Bauteile im Isolator wie beispielsweise die Blasformträger Anwendung finden. In diesem Fall stellt die Formträgerschale ein Befestigungselement dar, welches zum Befestigen der Blasform gegenüber dem Träger 2 (über den Blasformträger 6a) dient. Bevorzugt ist jedoch (anders als in Fig. 12 gezeigt,) das jeweilige Element der Umformungsstation wie z.B. der Blasformträger, unmittelbar über das Befestigungselement an dem Träger 2 angeordnet.

Fig. 13 zeigt eine Ausgestaltung der Medienversorgung für ein Druckkissen. Dabei ist wiederum der Blasformträgerteil 6b gezeigt, an dem die in Fig. 8 gezeigte Dichtungseinrichtung 82 ausgeformt ist. Die Bezugszeichen 83 und 85 beziehen sich auf Schiebehülsen oder - schläuche, welche den Medientransport auf die bewegte Formträgerschale (nicht gezeigt) bewerkstelligen. Damit kommt hier statt Schläuchen in den Reinraum eine Konstruktion zum Einsatz, bei der Bauteile zum Medientransport im Bereich des Druckkissens 84 platziert sind. Der Vorteil dieser Lösung ist, dass sämtliche zur Medienübertragung benötigten Bauteile hier innerhalb der umlaufenden Dichtungseinrichtung 62 ausgebildet sind (und damit faktisch außerhalb des Reinraums), nämlich in dem Blasformträger 6b. Von dort aus kann der Weitertransport der Medien insbesondere über die Befestigungselemente erfolgen, wie in den oben gezeigten Figuren veranschaulicht. Vorteilhaft wird daher innerhalb des Reinraums ein abgeschlossener Raum derart abgedichtet, dass er auch mit einem unsterilen Medium beaufschlagt werden kann. Bevorzugt erfolgt die Medienversorgung einer an einem Druckkissen platzierten Formträgerschale mit einer oder mehreren Schiebehülsen. Daneben kann die Medienversorgung jedoch auch über ein oder mehrere flexible Schlauchelemente im Bereich des Druckkissens erfolgen. Das Bezugszeichen 89 bezieht sich entsprechend auf einen flexiblen Schlauch.

Bei einer weiteren vorteilhaften Ausführungsform können die an der Blasform oder dem Blasformträger benötigten Medien zu- und ggf. abgeführt werden ohne den Reinraum zu durchqueren. Bevorzugt erfolgt die Medienzu- und/oder Abführung zu den Formträgern bzw. Blasformen abgetrennt von dem Reinraum.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Umformungsvorrichtung
- 2: Träger, Transporteinrichtung
- 4: Blasform
- 4a,b: Blasformteile
- 5: Reckstange
- 6: Blasformträger
- 6a,b: Blasformträgerteile
- 8: Blasstation, Umformungsstation
- 9: Führungskurve
- 10: Kunststoffvorformlinge
- 10a: Behältnis
- 11: Folgeeinrichtung
- 12: Schlitten
- 13: Boden
- 16: Trägerschale
- 17: Deckel
- 18: Wandung
- 19: Seitenwand, Abschnitt
- 20: Reinraum
- 22: Zuführeinrichtung
- 23: Halteeinrichtung
- 24: Abführeinrichtung
- 25: Dichtungseinrichtung
- 26: Träger
- 27: Dichtungseinrichtung
- 28: Träger (für Bodenform)
- 29: Haltekörper
- 30: Heizeinrichtung
- 31: Heizelemente
- 32: Sterilisationseinrichtung
- 34: Transporteinrichtung
- 36: Übergabeeinheit
- 37: Transportrad
- 40: Befüllungseinrichtung
- 42: Übergabeeinheit
- 44: Transporteinheit
- 50: Anordnung
- 55: Sterilisationseinrichtung
- 56: Wand
- 60: Schwenkwelle (Befestigungselement)
- 65, 67: Öffnungen
- 66, 68: Träger
- 70: Zuführleitung
- 70a,b: Zu- bzw. Abführleitung
- 72a,b: Leitungen
- 73,75: flexibler Schlauch
- 74a,b: Schlauchverbindungen
- 76a,b: flexible Verschlauchungsabschnitte
- 76: Drehverteiler
- 82: Abdichtung
- 83,85: Schiebehülse
- 84: Druckkissen
- 86: weitere Dichtungseinrichtung
- 88: Zwischenraum
- 89: flexibler Schlauch
- 90: Verriegelung
- 92, 94: Verriegelungselement
- 98: Hebel
- 102, 104: Schläuche
- 152: Beaufschlagungseinrichtung
- S: Reinraumgrenze
- U: Umgebung
- X: Drehachse
- Y: Richtung
- L: Außenbegrenzung des Reinraums

## Patentansprüche

1. Vorrichtung (1) zum Umformen von Kunststoffvorformlingen (10) zu Kunslstoffbehällnissen (10a) mit einer Vielzahl von Umformungsstationen (8), welche an einem beweglichen Träger (2) angeordnet sind, wobei die Umformungsstationen (8) jeweils Blasformen (4) aufweisen, innerhalb derer die Kunststoffvorformlinge (10) durch Beaufschlagung mit einem fließfähigen Medium zu Kunststoffbehältnissen (10a) umformbar sind sowie Blasformträger zum Halten dieser Blasformen (4) und wobei die Blasformträger (6) wenigstens zwei relativ zueinander bewegliche Blasformträgerteile (6a, 6b) zum Öffnen und Schließen der Blasformen (4) aufweisen und mit wenigstens einem Befestigungselement (60), über das wenigstens ein Element der Umformungsstationen (8), an dem Träger (2) angeordnet ist mit einem gegenüber einer Umgebung (U) mittels wenigstens einer Wandung (17, 18, 19) abgegrenzten Reinraum (20), der die einzelnen Umformungsstationen (8) wenigstens teilweise umgibt, so dass die Umformungsstationen (8) innerhalb dieses Reinraums (20) bewegbar sind und mit wenigstens einer zuführleitung (70), welche wenigstens einer in dem Sterilraum (20) angeordneten Umformungsstation (8) ein fließfähiges Medium zu deren Betrieb zuführt wobei sich die Zuführleitung (70) für das fließfähige Medium durch eine Reinraumgrenze (S) des Reinraums 20 hindurch erstreckt wobei
die Zuführleitung wenigstens abschnittsweise durch das Befestigungselement (60, 66, 68) geführt ist oder die Zuführleitung wenigstens abschnittsweise innerhalb eines in dem Reinraum angeordneten rohrförmigen Körpers geführt ist.

2. Vorrichtung nach Anspruch 1,
**dadurch gekennzeichnet, dass**
das Befestigungselement (60) eine Schwenkwelle (60) ist, mittels derer die Blasformträgerteile (6a, 6b) bezüglich einander bewegbar sind.

3. Vorrichtung nach wenigstens einem der vorangegangenen Ansprüche,
**dadurch gekennzeichnet, dass**
die Zuführleitung (70) wenigstens einen flexiblen Abschnitt (72) aufweist.

4. Vorrichtung nach Anspruch 3,
**dadurch gekennzeichnet, dass**
der flexible Abschnitt vollstäridig innerhalb des Reinraums (20) oder vollständig außerhalb des Reinraums (20) angeordnet ist.

5. Vorrichtung nach wenigstens einem der vorangegangenen Ansprüche,
**dadurch gekennzeichnet, dass**
wenigstens eine Zuführleitung mit wenigstens einer Blasform (4) oder mit wenigstens einem Blasformträger (6) in Strömungsverbindung steht.

6. Vorrichtung nach wenigstens einem der vorangegangenen Ansprüche,
**dadurch gekennzeichnet, dass**
die Vorrichtung wenigstens eine Abführleitung (70) aufweist, welche ein fließfähiges Medium aus dem Sterilraum (20) abführt.

7. Vorrichtung nach wenigstens einem der vorangegangenen Ansprüche,
**dadurch gekennzeichnet, dass**
wenigstens ein Befestigungselement (60, 66, 68) einen Kanal zum Leiten des Mediums aufweist.

8. Vorrichtung nach wenigstens einem der vorangegangenen Ansprüche,
**dadurch gekennzeichnet, dass**
sich die Zuführleitung (70) durch eine von dem Träger ausgebildete Wandung (17, 18, 19, 56) erstreckt.

9. Vorrichtung nach wenigstens einem der vorangegangenen Ansprüche,
**dadurch gekennzeichnet, dass**
ein Blasformträgerteil (6a, 6b) stationär gegenüber dem Träger (2) angeordnet ist.

10. Vorrichtung nach wenigstens einem der vorangegangenen Ansprüche,
**dadurch gekennzeichnet, dass**
das Befestigungselement (60) beweglich gegenüber dem Träger (2) gelagert ist.

## Claims

1. Apparatus (1) for shaping plastics material preforms (10) into plastics material containers (10a), having a multiplicity of shaping stations (8), which are arranged on a movable carrier (2), the shaping stations (8) each comprising blow moulds (4), inside which the plastics material preforms (10) can be shaped into plastics material containers (10a) by application of a flowable medium, as well as blow mould carriers for holding these blow moulds (4), and the blow mould carriers (6) comprising at least two blow moulding carrier parts (6a, 6b) movable in relation to one another to open and close the blow moulds (4), and having at least one fastening element (60), via which at least one element of the shaping stations (8) is arranged on the carrier (2) with a clean chamber (20) which is delimited with respect to a surrounding environment (U) by means of at least one wall (17, 18, 19) and which surrounds the individual shaping stations (8), at least in part, so that the shaping stations (8) are movable inside this clean chamber (20), and having at least one feed line (70), which feeds a flowable medium at least to one shaping station (8) arranged in the sterile chamber (20) for operation of said shaping station, the feed line (70) for the flowable medium extending through a boundary (S) of the clean chamber 20,
**characterised in that**
the feed line is guided, at least over portions, through the fastening element (60, 66, 68), or the feed line is guided, at least over portions, inside an tubular member arranged in the clean chamber.

2. Apparatus according to claim 1,
**characterised in that**
the fastening element (60) is a pivoting shaft (60), by means of which the blow mould carrier parts (6a, 6b) are movable in relation to one another.

3. Apparatus according to at least one of the preceding claims,
**characterised in that**
the feed line (70) comprises at least one flexible portion (72).

4. Apparatus according to claim 3,
**characterised in that**
the flexible portion is arranged completely inside the clean chamber (20) or completely outside the clean chamber (20).

5. Apparatus according to at least one of the preceding claims,
**characterised in that**
at least one feed line is connected in terms of flow to at least one blow mould (4) or to at least one blow mould carrier (6).

6. Apparatus according to at least one of the preceding claims,
**characterised in that**
the apparatus comprises at least one discharge line (70), which removes a flowable medium from the sterile chamber (20).

7. Apparatus according to at least one of the preceding claims,
**characterised in that**
at least one fastening element (60, 66, 68) comprises a duct for conveying the medium.

8. Apparatus according to at least one of the preceding claims,
**characterised in that**
the feed line (70) extends through a wall (17, 18, 19, 56) formed by the carrier.

9. Apparatus according to at least one of the preceding claims,
**characterised in that**
a blow mould carrier part (6a, 6b) is arranged in a stationary manner with respect to the carrier (2).

10. Apparatus according to at least one of the preceding claims,
**characterised in that**
the fastening element (60) is mounted movably with respect to the carrier (2).

## Revendications

1. Installation (1) pour la transformation de préformes en matière plastique (10) en récipients en matière plastique (10a), comprenant une pluralité de stations de transformation (8) montées sur un support mobile (2), lesdites stations de transformation (8) comportant chacune des moules de soufflage (4) à l'intérieur desquels les préformes en matière plastique (10) sont transformables en récipients en matière plastique (10a) par application d'un milieu fluide, ainsi que des supports de moule de soufflage pour le maintien desdits moules de soufflage (4), et les supports (6) de moule de soufflage comportant au moins deux parties (6a, 6b) de support de moule de soufflage déplaçables l'une par rapport à l'autre pour ouvrir et fermer les moules de soufflage (4), et comprenant au moins un élément de fixation (60), au moyen duquel au moins un élément des stations de transformation (8) est disposé contre le support (2), comprenant un compartiment stérile (20) isolé de l'environnement (U) par au moins une paroi (17, 18, 19), lequel entoure au moins en partie les différentes stations de transformation (8), de telle manière que les stations de transformation (8) sont mobiles à l'intérieur dudit compartiment stérile (20), et comprenant au moins une conduite d'amenée (70) alimentant en milieu fluide au moins une station de transformation (8) disposée dans le compartiment stérile (20) pour le fonctionnement de celle-ci, la conduite d'amenée (70) de milieu fluide traversant une limite (S) du compartiment stérile (20)
la conduite d'amenée étant guidée au moins en partie dans l'élément de fixation (60, 66, 68), ou la conduite d'amenée étant guidée au moins en partie à l'intérieur d'un corps tubulaire disposé dans le compartiment stérile.

2. Installation selon la revendication 1, **caractérisée en ce que**
l'élément de fixation (60) est un arbre pivotant (60) au moyen duquel les parties (6a, 6b) de support de moule de soufflage sont déplaçables l'une par rapport à l'autre.

3. Installation selon au moins une des revendications précédentes, **caractérisée en ce que**
la conduite d'amenée (70) présente au moins une section flexible (72).

4. Installation selon la revendication 3, **caractérisée en ce que**
la section flexible est intégralement comprise à l'intérieur du compartiment stérile (20) ou intégralement située en dehors du compartiment stérile (20).

5. Installation selon au moins une des revendications précédentes, **caractérisée en ce qu'**
au moins une conduite d'amenée est en liaison d'écoulement avec au moins un moule de soufflage (4) ou avec au moins un support (6) de moule de soufflage.

6. Installation selon au moins une des revendications précédentes, **caractérisée en ce que**
l'installation comporte au moins une conduite d'évacuation (70), laquelle évacue un milieu fluide hors du compartiment stérile (20).

7. Installation selon au moins une des revendications précédentes, **caractérisée en ce qu'**
au moins un élément de fixation (60, 66, 68) comprend un canal de conduite du milieu.

8. Installation selon au moins une des revendications précédentes, **caractérisée en ce que**
la conduite d'amenée (70) traverse une paroi (17, 18, 19, 56) formée par le support.

9. Installation selon au moins une des revendications précédentes, **caractérisée en ce qu'**
une partie (6a, 6b) de support de moule de soufflage est fixe par rapport au support (2).

10. Installation selon au moins une des revendications précédentes, **caractérisée en ce que**
l'élément de fixation (60) est monté de manière à être mobile par rapport au support (2).
